Europäisches Patentamt

European Patent Office

Office européen des brevets

(11) Publication number: **0 058 090**
A1

(12) # EUROPEAN PATENT APPLICATION

(21) Application number: **82300644.0**

(22) Date of filing: **09.02.82**

(51) Int. Cl.³: **H 01 M 12/06**
**H 01 M 4/74, H 01 M 4/96**

(30) Priority: **09.02.81 US 232430**

(43) Date of publication of application:
**18.08.82 Bulletin 82/33**

(84) Designated Contracting States:
**DE FR GB**

(71) Applicant: **Ray-O-Vac Corporation**
**101 East Washington Avenue**
**Madison WI 53703(US)**

(72) Inventor: **Dopp, Robert Brian**
**510, Presidential Lane**
**Madison Wisconsin(US)**

(74) Representative: **Hedley, Nicholas James**
**Matthew et al,**
**Thames House (fifth floor) Millbank**
**London SWIP 4QF(GB)**

(54) A cathode assembly for metal-air button cells.

(57) There is provided a laminar cathode assembly which, when incorporated in a metal-air button cell, reduces the impedence of the cell and increases its capacity. The assembly consists of an activating layer (26) of active carbon and polyfluoroethylene, an etched nickel screen (28) acting as a current collector, and a hydrophobic layer (30).

EP 0 058 090 A1

## A Cathode Assembly for Metal-Air Button Cells

The present invention relates to laminar cathode assemblies for metal-air button cells, the cathode assemblies comprising a metallic current collector, a hydrophobic layer and an activating layer.

Laminar cathodes for metal-air button cells are well-known. U.S. Patent Specification No. 3,897,265 describes a metal-air button cell having a cathode assembly composed of (a) a current collecting member or screen, (b) an activating layer of carbon black, a catalyst and a hydrophobic binder, (c) a hydrophobic membrane and (d) a separator. U.S. Patent Specification No. 4,054,726 describes a zinc-air button cell in which the cathode assembly is composed of a metal screen, a catalytically active layer of active carbon, silver catalyst and polytetrafluoroethylene and a hydrophobic layer. Likewise, the cell described in U.S. Patent Specification No. 3,746,580 has a cathode composed of a metallic grid current collector, an activating layer of carbon and wet polymer, e.g. polytetrafluoroethylene, and a hydrophobic layer.

It would to desirable to reduce the impedance and capacity (lifetime) of metal-air button cells in a manner that does not require the use of expensive metal catalysts in the cathode. The present invention provides such an improvement in a simple and cheap manner.

According to the present invention there is provided a laminar cathode assembly for a metal-air button cell, which assembly comprises an activating layer, a foraminous metallic current collector adjacent to or embedded in the activating layer and a hydrophobic layer, characterised in that the current collector is etched.

The present invention further provides a metal-air button cell incorporating such a cathode assembly.

The amount of etching of the current collector required is small and preferably only from 0.3 to 1% of the metal is removed by the etching. Any etching method may be used but we have found that acid etching works well.

It is believed that the etching improves the bond between the current collector and the activating layer and thereby reduces the impedance of the cell. It also results in a higher cell capacity in terms of the number of mA hours that the cell can supply before the voltage reaches a certain, arbitary value.

The current collector is preferably a screen or mesh and may be made of any conductive metal, but preferably is made of nickel or stainless steel.

The activating layer may comprise a mixture of an activated carbon and a hydrophobic polymer, for example polyethylene, polypropylene or a fluorocarbon e.g. polytetrafluoroethylene. The preferred mixture is activated carbon and polytetrafluoroethylene in a weight ratio of 50 to 80% activated carbon and 50 to 20% of the polymer e.g. 55 to 65% activated carbon and 35 to 45% polytetrafluoroethylene.

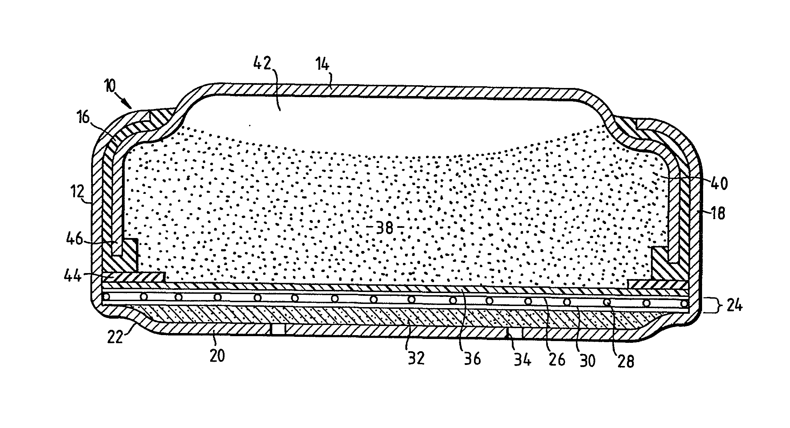

A cell incorporating a cathode assembly in accordance with the present invention will now be described, by way of example only, with reference to the accompanying drawing which shows a cross-sectional elevation of the cell.

Referring to the accompanying drawing, the cell 10 is composed of a housing formed by a can 12 and a saucer-shaped cover 14. The can 12 has an open end into which the cover 14 is inserted and the can and the cover are insulated from each other by a grommet 16. The grommet, which is annular and has a J-shaped cross-section, covers the sides and the rim 46 of the cover. The can 12 forms the positive (cathodic) terminal of the cell, while the cover 14 forms the negative (anodic) terminal. The can and the cover may be made of the same or different materials, for example nickel-coated steel, nickel, alloys of nickel and stainless steel. The can has a wall portion 18, a flat bottom portion 20 and a shoulder 22.

Located within the cathode can 12 is an air (oxygen) depolarisable cathode assembly 24, which is a laminar construction composed of an activating layer 26, a porous current collector 28 and a porous hydrophobic layer 30. The activating layer 26 comprises a pressed mixture of activated carbon and a hydrophobic material, for example a polyolefin, e.g. polyethylene, polypropylene, or a fluorocarbon, for example polytetrafluoroethylene. It is preferred that the activating layer is a mixture of polytetrafluoroethylene and activated carbon. The preferred mixture ratio, by weight, is 50-80% activated carbon and 50-20% polytetrafluoroethylene. More preferred is about 55-65% activated carbon and 35-45% polytetrafluoroethylene. Pressed adjacent to, embedded in or contained within, the material of the activating layer 26 is the current collector 28. The current collector is in electrical and physical contact with the cathode can 12 and made of a conductive metal, e.g. nickel or stainless steel, preferably in the form of a mesh or screen. The current collector is etched to improve the bond between the activating layer and the current collector. This improved bond reduces the impedence and increases the capacity characteristics of the cell. It has been found that only a very small amount of etching is required for example the etching may remove of the order of 0.3% to 1.0% of the metal. The etching can be done by any method known to those skilled in the art. However, we used acid etching in the preparation of the cell shown in the drawing.

The hydrophobic layer 30 permits the passage of oxygen to the active layer 26 while preventing the electrolyte of the cell from leaking. It is sometimes desirable to use more than one such hydrophobic layer in case one of the layers contains a fault through which the electrolyte can leak. Thus, the use of two or more such layers reduces the risk of electrolyte leakage. The hydrophobic layer 30 is composed of hydrophobic polymer material having sufficient porosity to permit an amount of oxygen to flow therethrough that is sufficient to provide the desired current density requirement of the cell. Suitable materials include, for example, polyethylene, polypropylene, nylon, and polymers of vinylidene chloride, vinyl chloride and fluorocarbons e.g. polytetrafluoroethylene. Polytetrafluoroethylene is the preferred material.

Located between the cathode assembly 24 and the flat bottom of the cathode can 12 is a porous layer 32 that serves both to distribute air uniformly over the cathode assembly and to provide support for the cathode assembly.

Air is admitted to the cathode assembly 24 through one or more holes 34 formed in the flat bottom portion 20 of the can 12. The holes must, of course, be of a sufficient size to admit the required amount of air to the cathode assembly 24.

Above the cathode assembly 24 is located a separator 36 that separates the cathode assembly from the anode compartment 38 of the cell. The separator 36 may be made of any conventional material known in the art. These known materials include Pudo cellophane, Acropor WA (woven nylon base treated with polyvinylchloride), Celgard (microporous polypropylene), Permion (polyethylene grafted with polyvinyl chloride), Viscon (regenerated cellulose treated with polyvinyl-chloride), Pellon (polyester based), Dynel (acrylic copolymer) and the like.

Located within the anode compartment 38 is the anode material 40, which may be any of the suitable porous materials known to the art, e.g. a gelled amalgamated zinc powder or a zinc compact. There is a void space 42 between the anode 40 and cover 14 to allow for expansion of the anode material during discharge of the cell.

An electrolyte solution is added to the cell during assembly and may be any one of the type generally known in the art. A suitable alkaline electrolyte is aqueous KOH or NaOH and a suitable electrolyte for a cell using an organic redox system is an aqueous solution of zinc chloride and mixtures of zinc chloride and ammonium chloride. A suitable substantially neutral electrolyte system is ammonium chloride or manganese chloride or a mixture of manganese chloride and magnesium chloride solution.

A washer 44 made of resilient material is placed on top of the separator 36 and lies around the periphery thereof. It may be made of any nonconductive alkali-resistant resilient material, e.g. a polyacetals, ABS (acrylonitrile-butadiene-styrene) resins, polyamides (for example Nylon 6; Nylon 6,6; Nylon 6, 10; Nylon 11; and Nylon 12); synthetic rubbers (for example butyl rubber, silicone rubber, ethylenepropylene rubber, and chloroprene rubber), polyolefins (for example polyethylene and polypropylene), fluorocarbons (for example polytetrafluoroethylene) and other polymers such as styrene. The preferred materials are polyethylene and polystyrene.

The grommet 16 may be made of one of the materials listed above in connection with the washer 44, but the washer and the grommet need not be made of the same material. The grommet 16 is preferably covered with an adhesive e.g. an epoxy resin, a polyamide or bitumen prior to incorporation into the cell.

The internal components of the cell are rigidly retained by crimping the top edge of the cathode can 12 over the grommet 16. This presses the grommet 16 and the cover 14 downwardly against the washer 44 which in turn urges the separator 26 and the cathode assembly 24 against the shoulder 22 of the can 12. Under the influence of the applied crimping pressure, a seal is produced between the grommet 16 and the annular ring 44, between the annualar ring and the separator 36 and between the cathode assembly 24 and the shoulder 22 of the cathode can 12 so that electrolyte cannot creep around the cathode assembly and leak through the air holes 34.

After crimping the cathode can 12, the completed cell is centrifuged in a manner which moves the zinc against the separator. It has been found that when the centrifuge time is about one minute, a 200 G force is insufficient to obtain the desired effect and at about 1400 G damage to air cathode can occur. The preferred centrifugical force is about 700-1200 G, or more preferably about 900 G when the centrifuge time is one minute. Those skilled in the art can easily ascertain the force to utilize for lower or greater time periods of treatment. However, it has found that when 900 G are used the maximum effect is obtained between one to three minutes, after which time no greater effects are obtained, and it is possible to start to damage the air cathode.

## EXAMPLE

Three sets of cells, each set having 30 cells, of the design shown in the accompanying drawing were made. Half the cells had an acid etched nickel screen current collector and half had a non-etched nickel screen current collector.

The cells were tested for impedence at 100 hz and for capacity in mAH to 1.1. volt at 1500 ohms.

Prior to testing, the cells were stored at 55°C for two hours.

| Set Number | Z | s | % | mAhr to 1.1v at 1500Ω | s | % |
|---|---|---|---|---|---|---|
| 20383 (not etched) | 7.52 | 4.78⎫ | 99.5 | 155 | 6 ⎫ | 100 |
| 20386 (etched) | 3.41 | 0.90⎭ | | 165 | 5 ⎭ | |
| E3069A (not etched) | 5.23 | 0.30⎫ | 100 | 153.6 | 10.3⎫ | 93.1 |
| E3069B (etched) | 3.93 | 0.43⎭ | | 159.2 | 6.1⎭ | |
| E3209A (not etched) | 6.68 | 1.59⎫ | 63.6 | | | |
| E3209B (etched) | 5.83 | 2.00⎭ | | | | |

s represents the standard deviation of the cells within each half set, although not all the cells of each half set were tested, and the figures given in the column headed by the % symbol are the probabilities,expressed in percentage terms, that the two half sets compared have significantly different properties.  It can be seen from the Table that the etching of the current collector decreases the impedence of the cells and increases their capacity.

## Claims

1.      A laminar cathode assembly (24) for a metal-air button cell (10), which assembly comprises an activating layer (26), a foraminous metallic current collector (28) adjacent to or embedded in the activating layer, and a hydrophobic layer (30), characterised in that the current collector (28) is etched.

2.      An assembly as claimed in claim 1, characterised in that the current collector (28) is a nickel or stainless steel screen.

3.      An assembly as claimed in claim 1 or in claim 2, characterised in that from 0.3 to 1% of the metal of the current collector (28) has been etched away.

4.      An assembly as claimed in any one of claims 1 to 3, characterised in that the activating layer (26) comprises activated carbon and a hydrophobic polymer.

5.      An assembly as claimed in claim 4, characterised in that the activating layer (26) consists of 50 to 80% by weight of activated carbon and 20 to 50% by weight of the hydrophobic polymer.

6.      An assembly as claimed in claim 4 or claim 5, characterised in that the hydrophobic polymer is polytetrafluoroethylene.

7.      An assembly as claimed in any one of claims 1 to 6, characterised in that the current collector (28) has been acid etched.

8.      A metal-air button cell incorporating a cell as claimed in any one of claims 1 to 7.

1/1

# European Patent Office

# EUROPEAN SEARCH REPORT

## DOCUMENTS CONSIDERED TO BE RELEVANT

| Category | Citation of document with indication, where appropriate, of relevant passages | Relevant to claim |
|---|---|---|
| A | US – A – 4 189 526 (CRETZMEYER et al.)<br><br>* Fig. 1; column 3, lines 24-32 * | 1 |

CLASSIFICATION OF THE APPLICATION (Int. Cl. 3)

H 01 M 12/06

H 01 M  4/74

H 01 M  4/96

TECHNICAL FIELDS SEARCHED (Int.Cl. 3)

H 01 M

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document. but published on. or after the filing date
D: document cited in the application
L: document cited for other reasons

&: member of the same patent family,
corresponding document

| X | The present search report has been drawn up for all claims | | |
|---|---|---|---|
| Place of search<br>VIENNA | Date of completion of the search<br>13-05-1982 | Examiner<br>LUX | |

EPO Form 1503.1  06.78